# EUROPÄISCHE PATENTSCHRIFT

(11) **EP 0 638 240 B1**
(45) Veröffentlichungstag und Bekanntmachung des Hinweises auf die Patenterteilung: **07.01.1999**
(21) Anmeldenummer: 94110577.7
(22) Anmeldetag: 07.07.1994
(51) Int. Cl.: A22C 9/00, A23B 4/16, A23L 3/00

(54) **Verfahren und Durchlaufvakuumtumbler zur Behandlung von Nahrungsmitteln**
Method and vacuum-tumbler for the treatment of food products
Procédé et tambour continuellement opératif pour le traitement de produits alimentaires

(30) Priorität: 13.08.1993 CH 2404/93; 02.03.1994 CH 610/94
(43) Veröffentlichungstag der Anmeldung: 15.02.1995
(73) Patentinhaber: Dorit Food Processing Equipment Ltd, 8956 Killwangen (CH)
(72) Erfinder: Suhner, Beat, CH-5442 Niederrohrdorf (CH)
(74) Vertreter: Liebetanz, Michael, Dipl.-Phys.

(56) Entgegenhaltungen:
- EP-A- 0 274 334
- EP-A- 0 457 181
- WO-A-89/08982
- DE-U- 9 314 582
- FR-A- 2 387 607
- GB-A- 1 232 905
- GB-A- 2 085 742
- GB-A- 2 098 849
- US-A- 4 958 410
- DATABASE WPI Week 8045, Derwent Publications Ltd., London, GB; AN 80-80223 & SU-A-724 112 (MOSCOW MEAT DAIRY INST) 31. März 1980

## Beschreibung

Die vorliegende Erfindung bezieht sich auf ein Verfahren und einen Vakuumtumbler gemäss den Oberbegriffen der Ansprüche 1 und 5.

Ein solcher Vakuumtumbler ist aus der GB-A-1 232 905 bekannt. Dieser wird zum Beispiel und insbesondere zur Behandlung von Fleischstücken, wie zum Beispiel mürben, massieren, marinieren, usw. genutzt. Bei industriell eingesetzten Tumblern ist es bekannt, die Fleischstücke durch eine frontseitig an der Trommel angebrachte Öffnung einzugeben und durch eine rückseitige Öffnung herauszunehmen. Mit auf der Trommelinnenseite angebrachten Schikanen wird eine in etwa gleichmässige Umwälzung der eingebrachten Fleischstücke erreicht. Diese Tumbler haben indessen den Nachteil, dass nach Ablauf der Behandlungszeit die Beladungs- und Entleerungsöffnung geöffnet, der Tumbler geleert, neu beladen und wieder evakuiert werden muss. Durch diesen durch das Be- und Entladen arbeitsintensiven, intermittierenden Betrieb sind die Verlustzeiten der Maschine vergleichsweise gross bzw. deren Leistung gering.

Aus der GB-A-2 098 849 ist ein Verfahren zur Konzentration von Früchten bekannt. Bei diesem wird die Frucht durch eine erste Vakuumschleuse in einen Hochvakuumraum eingebracht, in welchem diese aufgeheizt wird. Anschliessend wird die Frucht in einen aufgeheizten rotierenden Zylinder eingebracht, der ebenfalls ein Hochvakuum aufweist. Die Drehung ist so ausgestaltet, dass der Saft der Früchte, der sich auf den Wänden des Zylinders absetzt, abdampft, wobei die Früchte nicht verrührt werden und insbesondere die untere Bodenlinie des Zylinders nicht verlassen. Schliesslich wird die Frucht über eine zweite Vakuumschleuse entfernt und weiterverarbeitet.

Dieses Verfahren weist den Nachteil auf, dass lediglich eine Wärmebehandlung durchgeführt wird, die insbesondere bei Fleischprodukten kein sinnvolles Ergebnis bringt. Somit ist dieses Verfahren insbesondere für Anwendungen in der fleischverarbeitenden Industrie ungeeignet.

Die vorliegende Erfindung stellt sich daher die Aufgabe, ein Verfahren bzw. eine Vorrichtung der genannten Art derart zu verbessern, dass ein kontinuierlicher Betrieb, insbesondere mit Fleischprodukten, möglich wird.

Erfindungsgemäss wird diese Aufgabe gelöst durch die Merkmale der Ansprüche 1 und 5.

Die Erfindung ermöglicht den Vorteil, dass jedes Fleischstück genau die vorgeschriebene Behandlungszeit erfährt, so dass die optimale Behandlungsweise genau festgelegt werden kann. Auch hierdurch kann die Behandlungszeit minimalisiert und die Maschinenleistung verbessert werden. Weiter entfällt der manuelle Arbeitsaufwand für das Be- und Entladen der Trommel.

Anhand der beiliegenden schematischen Zeichnung wird die Erfindung beispielsweise erläutert. Es zeigen:
- Fig. 1: eine Seitenansicht eines Vakuumtumblers, wobei Teile weggebrochen sind,
- Fig. 2: eine Ansicht des Vakuumtumblers nach Fig. 1 in Richtung des Pfeiles II und
- Fig. 3: eine Draufsicht auf das in Fig. 1 linke Ende des Vakuumtumblers.

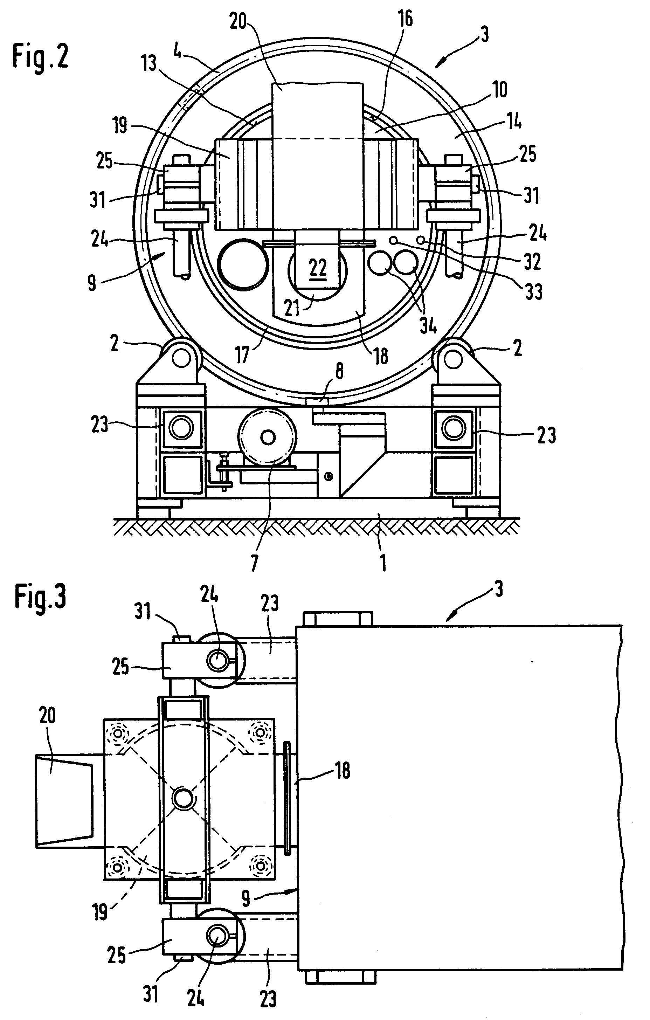

Ein ortsfest anzuordnendes Maschinenbett 1 weist an jedem Ende ein Rollenpaar 2 (Fig. 2) auf, zwischen denen in regelmässigen Abständen weitere Rollenpaare vorhanden sein können. Auf diesen Rollenpaaren 2 ist frei drehbar eine Trommel 3 gelagert, die in ihrer Längsmitte mit einem peripheren Zahnkranz 4 versehen ist. Unterhalb der Trommeln 3 ist ein Antriebsaggregat in das Maschinenbett 1 einmontiert, das einen Motor 5 und ein Untersetzungsgetriebe 6 umfasst und auf dessen Abtriebwelle ein Zahnrad 7 fest aufgesetzt ist. Letzteres kämmt mit dem die Trommel 3 umgebenden Zahnkranz 4. Am Maschinenbett 1 frei drehbar gelagerte, am Zahnkranz 4 anliegende Führungsrollen 8 verhindern eine längsaxiale Verschiebung der Trommel 3 auf den Rollenpaaren 2. Bei laufendem Motor 5 dreht sich die Trommel 3, wobei sie auf den Rollenpaaren 2 abrollt.

An den beiden Enden ist die Trommel 3 des Vakuumtumblers durch Stirnwände 9 und 9' geschlossen, die im wesentlichen gleich ausgebildet sind. Es wird daher nur der vordere Teil beschrieben und entsprechende Teile des hinteren Teils sind mit entsprechenden Hinweisziffern versehen. Die Stirnwand 9 ist in zwei Wandabschnitte 10 und 14 unterteilt. Der innere, nicht mit der Trommel 3 mitdrehende Wandabschnitt 10 ist koachsial zur Trommeldrehachse 11 und mit einer Beladeöffnung 12 versehen. In radialer Richtung ist er durch eine zylindrische Fläche 13 begrenzt, die eine kreisförmige, periphere Umfangfläche bildet. Dieser innere Wandabschnitt 10 ist vom ringförmigen, äusseren Wandabschnitt 14 axial umgeben, an dessen Aussenumfang der Mantel 15 der Trommel 3 befestigt ist. Der Innenumfang des äusseren Wandabschnitts 14 ist durch eine zylindrische Innenfläche 16 gebildet, die der Umfangfläche 13 unter Bildung eines Ringspaltes gegenüberliegt.

Der Ringspalt ist durch eine Vakuumdichtung 17 ausgefüllt und abgedichtet. Die Vakuumdichtung 17 ist fest mit einem der Wandabschnitte 10 bzw. 14 verbunden und erlaubt eine relative Drehbewegung um die Trommeldrehachse 11 zwischen den beiden Wandabschnitten 10 bzw. 14. Der innere Wandabschnitt 10 ist weiter, wie später beschrieben, in Richtung der Trommeldrehachse 11 hin und her verschiebbar und kann in die Trommel 3 eingerückt bzw. aus der Trommel ausgerückt werden.

An die Beladeöffnung 12 schliesst nach aussen ein Beladestutzen 18 an, an den eine Vakuumzellradschleuse 19 mit einem Fülltrichter 20 angeflanscht ist. Das Zellrad der Schleuse 19 ist mittels eines Motors 21 und eines Getriebes 22 antreibbar. Die radial orientierten Zellwände der Zellradschleuse 19 dichten das Innere der Trommel 3 nach aussen vakuumdicht ab. In den Fülltrichter 20 eingelegte Fleischstücke rutschen in die zum Trichter hin offene Zelle der Zellradschleuse 19. Beim Drehen des Zellrades wird diese mit Fleisch beschickte Zelle gegen die Aussenatmosphäre geschlossen und dann gegen das Trommelinnere und den dort herrschenden Unterdruck geöffnet, worauf die Fleischstücke durch den Beladestutzen 18 in die Trommel 3 gleiten. Anstelle einer Zellradschleuse kann auch eine Vakuumschieberschleuse verwendet werden.

Um kleine Exzentrizitäten der Drehbewegung der Trommel 3 auszugleichen, ist der innere Wandabschnitt 10 mit der Zellradschleuse 19 zusammen sozusagen schwimmend gelagert. Zu diesem Zweck sind an beiden Trommelenden zu gegenüberliegenden Seiten mit dem Maschinenbett 1 verbundene Konsolen 23 vorgesehen, von denen jede einen vertikalen Führungspfosten 24 trägt. Auf jeden der Führungspfosten 24 ist eine Manschette 25 mit einem Schwenklager 26 aufgeschoben. Auf dem Führungspfosten 24 ist die Manschette 25 axial um eine durch nicht dargestellte Anschläge begrenzte Wegstrecke verschiebbar, so dass sie kleinen Vertikalbewegungen des inneren Stirnwandteils 10 folgen kann. Das Gehäuse der Zellradschleuse 19 weist seitlich abstehende Achszapfen 31 auf, die in den Schwenklagern 26 schwenkbar und um eine beschränkte Wegstrecke axial verschiebbar gelagert sind. Dreht die Trommel 3 leicht exzentrisch, kann ihr durch die vertikale und horizontale Verschiebbarkeit der Manschette 25 und die schwenkbare Lagerung der Zellradschleuse 19 der innere Wandabschnitt 10 zwanglos folgen.

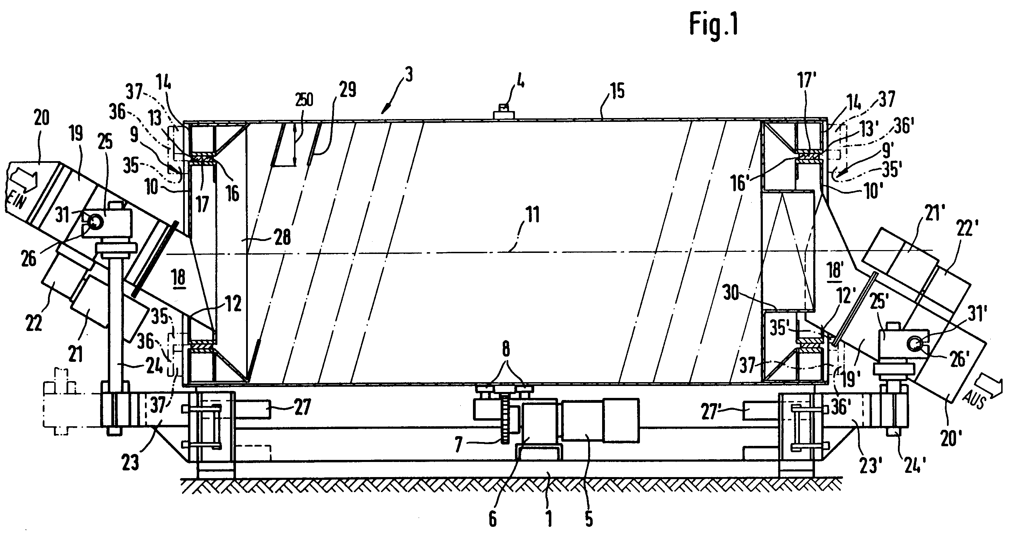

Die Konsolen 23 sind je auf einem zur Trommeldrehachse 11 parallelen Verschiebelager 27 verschiebbar gelagert und können darauf aus der in Fig. 1 mit ausgezogenen Strichen gezeichneten in die strichpunktiert dargestellte Lage und zurück verschoben werden. Bei einer solchen Verschiebung wird der innere Wandabschnitt 10 axial aus der Trommel 3 ausgerückt. Nach dem Ausrücken kann der Wandabschnitt 10 zusammen mit der Zellradschleuse 19 um 90° verschwenkt werden, wodurch das Trommelinnere für Reiniguns- oder Reparaturzwecke leicht zugänglich wird.

Die Trommel 3 bildet auf der Innenseite einen gegen die Beladeöffnung 12 sich verjüngenden trichterförmigen Konus 28, der die eintretenden Fleischstücke zwischen zwei benachbarte Windungen einer sich über die Trommellängsachse erstreckenden Wendel 29 lenkt. Die Wendel 29 ist drehfest mit der Trommel 3 verbunden und weist zu deren Mantel 15 einen Abstand Null bis zirka 5 Millimeter auf. Kein Abstand ist erwünscht, wenn zwischen den Windungen je eine bestimmte Menge Behandlungsflüssigkeit, wie zum Beispiel eine Lake oder Marinade gefangen gehalten werden soll. Ein Abstand dagegen ist angezeigt, wenn die Windungen für die Behandlungsflüssigkeit kommunizieren sollen, so dass sie sich gleichmässig über die Trommellänge verteilen kann. Die Rippenhöhe der Wendel beträgt vorzugsweise 20 bis 30 Zentimeter und deren Ganghöhe vorzugsweise zirka 20 Zentimeter. Die Rippen- und Ganghöhen sind so bemessen, dass die von einer Zelle der Zellradschleuse 19 in die Trommel 3 abgegebene Fleischcharge den wirksamen Zwischenraum zwischen zwei benachbarten Windungen füllt.

Die Stirnwand 9' der Trommel 3 weist eine Entnahmeöffnung 12' auf, an die ein Entnahmestutzen 18' anschliesst, an den eine Zellradschleuse 19' angeflanscht ist. Die Ausbildung der Stirnwand 9', deren Verbindung mit der Zellradschleuse 19' und deren schwimmende und ausrückbare Lagerung sind gleich wie bei der Stirnwand 9, so dass auf deren wiederholende Beschreibung verzichtet wird.

Am Ende der Trommel 3 verjüngt sich deren wirksamer Innendurchmesser zu einem Austragstutzen 30. Entsprechend verjüngt sich der Wendeldurchmesser, so dass die Wendel 29 die zwischen den Windungen liegenden Fleischstücke durch den Austragstutzen 30 in den Entnahmestutzen 18 fördern, der sie kontinuierlich an die Zellradschleuse 19' abgibt. Anstelle der Zellradschleuse 19' kann auch eine Schieberschleuse eingesetzt sein.

Der eingangsseitige innere Wandteil 10 ist nebst der Beladeöffnung 12 weiter mit einem Anschluss 32 für eine Vakuumquelle, mit einem Anschluss 33 für eine Behandlungslösung sowie mit einem Anschluss 34 für unterkühltes Kohlendioxyd zur thermischen Beeinflussung des Behandlungsgutes versehen.

Anstelle von Kohlendioxyd kann auch ein anderes Kühlmedium, wie zum Beispiel flüssiger Stickstoff verwendet werden. Einzelne der oder alle Anschlüsse 32, 33, 34 könnten auch auf der Entnahmeseite im inneren Wandteil 10' angeordnet sein. An einem der beiden Wandteile 10, 10' ist zudem ein nicht dargestellter Absaugstutzen angebracht, durch den das sich verflüchtigende Kühlmedium abgesaugt wird.

Durch die Anschlüsse 33 und 34 können die Behandlungslösungen und/oder die thermischen Behandlungsmedien unter Vakuum in den Tumbler eingebracht werden.

Zwischen den einzelnen Windungen der Wendel 29 können weitere auf das Behandlungsgut wirkende Schikanen eingebaut sein.

Um die Wandabschnitte 10, 10' gegen die Vakuumbelastung zu stabilisieren sind (in Fig. 1 strichpunktiert eingezeichnet) an deren Aussenseiten je drei bis vier Lagerkörper 35, 35' befestigt, die radialsymmetrisch um die Trommeldrehache 11 angeordnet sind. Diese Lagerkörper 35, 35' bilden je einen Anschlag 36, 36', welche Anschläge 36, 36' je an der Stirnfläche eines knickfesten Druckstabes 37 anliegen. Die Druckstäbe 37 umgeben die Trommel 3 käfigartig und sind unter sich sowie mit dem Maschinenbett 1 fest verbunden. Die durch ein Vakuum in der Trommel 3 auf die Wandabschnitte 10, 10' in Richtung der Trommeldrehachse 11 ausgeübten Kräfte werden gleichmässig um die Trommeldrehachse 11 verteilt als axiale Druckkräfte auf die beiden Enden der Druckstäbe 37 übertragen und von diesen aufgenommen.

Mit der beschriebenen Vorrichtung kann Fleisch zart gemacht, massiert, angesalzen oder mariniert werden. Gleiches gilt für Geflügel, Fisch und Seafood. Es können mit dieser Vorrichtung auch granulatförmige Nahrungsmittel poliert oder Pellets behandelt werden.

## Patentansprüche

1. Verfahren zum Behandeln von Fleischportionen oder anderen portionierten Nahrungsmitteln, wobei die Portionen während einer bestimmten Zeitspanne mindestens einem Behandlungsmedium (32, 33, 34) in einem Vakuumtumbler ausgesetzt werden, mit den Verfahrensschritten,
- dass die besagten Portionen kontinuierlich durch eine erste Vakuumschleuse (19) in eine Behandlungszone (3) in dem Vakuumtumbler gefördert werden,
- dass die Portionen kontinuierlich entlang einer Wegstrecke durch die Behandlungszone (3) gefördert, dabei periodisch längs wendelförmigen Streckenabschnitten geführt, dabei gedreht und unter Unterdruck einem flüssigen Behandlungsmedium (33, 34) ausgesetzt werden, und
- dass die besagten Portionen kontinuierlich durch eine zweite Vakuumschleuse (19') aus der Behandlungszone (3) in dem Vakuumtumbler gefördert werden.

2. Verfahren nach Anspruch 1, dadurch gekennzeichnet, dass eine Vielzahl von Portionen in mehrere Portionen umfassende Chargen unterteilt und die Chargen nacheinander in die Behandlungszone (3) gefördert werden.

3. Verfahren nach einem der Ansprüche 1 oder 2, dadurch gekennzeichnet, dass ein Behandlungsmedium (33, 34) ein Kühlmittel wie eine rasch verdunstende Flüssigkeit oder ein rasch sublimierender Stoff ist.

4. Verfahren nach einem der Ansprüche 1 bis 3, dadurch gekennzeichnet, dass ein Behandlungsmedium (33, 34) eine Flüssigkeit ist, welche gelöst, suspendiert, emulgiert und/oder vermengt einen Gewürzstoff, ein Salz, ein Konservierungsmittel und/oder einen Farbstoff enthält.

5. Vakuumtumbler zur Durchführung des Verfahrens nach Anspruch 1, insbesondere zur Behandlung von Fleischstücken oder anderen portionierten Nahrungsmitteln mit einer um ihre Längsachse (11) drehbar gelagerten, evakuierbaren Trommel (3), die an einer Stirnseite eine Beladeöffnung und auf der anderen Stirnseite eine Entnahmeöffnung (12) aufweist und die auf das Behandlungsgut eine Förderwirkung von der Beladeöffnung (12) zur Entnahmeöffnung (12') ausübt, dadurch gekennzeichnet, dass sowohl an die Beladeöffnung (12) als auch an die Entnahmeöffnung (12') je eine Vakuumschleuse (19, 19') angeschlossen ist, und dass zwischen beiden Öffnungen (12, 12') und der zugehörigen Vakuumschleuse (19, 19') je eine auch bei drehender Trommel (3) wirksame Vakuumdichtung (17) vorhanden ist.

6. Vakuumtumbler nach Anspruch 5, dadurch gekennzeichnet, dass mindestens die der Beladeöffnung (12) zugeordnete Schleuse (19) eine Dosierschleuse, vorzugsweise eine Zellrad- und/oder Schieberschleuse ist.

7. Vakuumtumbler nach Anspruch 5 oder 6, dadurch gekennzeichnet, dass die Trommel (3) innenseitig eine Wendel (29) aufweist.

8. Vakuumtumbler nach Anspruch 7, dadurch gekennzeichnet, dass zwischen der Wendel (29) und Trommelinnenwand kein oder nur ein geringer Abstand von einigen Millimetern besteht.

9. Vakuumtumbler nach Anspruch 7, dadurch gekennzeichnet, dass während einem Arbeitstakt einer Vakuumschleuse (19, 19') die Trommel (3) eine Umdrehung ausführt.

10. Vakuumtumbler nach einem der Ansprüche 5 bis 9, dadurch gekennzeichnet, dass jede der Stirnwände (9, 9') einen zentralen, koachsial mit der Trommelachse (11) nicht mitdrehenden Wandabschnitt (10, 10') mit einer kreisförmigen peripheren Umfangfläche (13, 13') aufweist, um den der Trommelmantel (15) dreht und in dem die Belade- bzw. Entnahmeöffnung (12, 12') angeordnet ist.

11. Vakuumtumbler nach Anspruch 10, dadurch gekennzeichnet, dass jede der Stirnwände (9, 9') einen den zentralen Wandabschnitt (10, 10') umgebenden, mit dem Trommelmantel (15) fest verbundenen und mitdrehenden, ringförmigen Wandabschnitt (14, 14') aufweist, und dass zwischen den Wandabschnitten (10, 14 bzw. 10', 14') eine Vakuumringdichtung (17, 17') vorhanden ist.

12. Vakuumtumbler nach Anspruch 10 oder 11, dadurch gekennzeichnet, dass der zentrale Wandabschnitt (10, 10') an einer Trommellängsachse (11) quer orientierten, vorzugsweise im Abstand zur Trommellängsachse variierbaren Achse schwenkbar gelagert und mit dieser in Richtung der Trommellängsachse (11) verschiebbar ist.

13. Vakuumtumbler nach einem der Ansprüche 10 bis 12, dadurch gekennzeichnet, dass wenigstens in einem der zentralen Wandabschnitte (10, 10') Anschlüsse (32 - 34) für eine Vakuumleitung und/oder eine Leitung für die Zugabe eines Behandlungsingredienzes (5) und/oder eines Gases zur thermischen Beeinflussung des Behandlungsgutes vorhanden ist.

14. Vakuumtumbler nach einem der Ansprüche 7 bis 13, dadurch gekennzeichnet, dass die Trommel (3) mit ihrem Mantel (15) auf Rollen (2) drehbar gelagert und an einem Umfangzahnkranz (4) antreibbar ist.

## Claims

1. A method for the treatment of portions of meat or other portioned foods, where the portions are subjected to at least one agent (32, 33, 34) in a vacuum tumbler for a certain period of time, the steps incuding,
- that the said portions are conveyed continuously through a first vacuum sluice (19) to a treatment zone (3) in the vacuum tumbler,
- the portions are conveyed continuously along a path through the treatment zone (3), where they are periodically passed along helical path sections, in the said process they are turned and, under vacuum, subjected to a liquid agent (33, 34), and
- the said portions are conveyed continuously through a second vacuum sluice (19') from the treatment zone (3) inside the vacuum tumbler.

2. Procedure according to claim **1**, characterised in, that a plurality of portions is subdivided into charges containing several portions, and that the charges are conveyed, one after the other, into the treatment zone (3).

3. Procedure according to claim **1** or **2**, characterised in, that an agent (33, 34) is a coolant, like a fast vaporising liquid or a fast subliming medium.

4. Procedure according to one of the claims **1** t**o 3**, characterised in, that an agent ( 33, 34) is a liquid that contains condiments, a salt, a preservative and/or a dye in either solved, suspended, emulsified or blended form.

5. Vacuum tumbler for performing the procedure according to claim **1**, especially for treating of pieces of meat or other portioned foods with an evacuatable drum (3) pivoted on its longitudinal axis (11) , the drum having at one end a loading opening (12) and at the other end a removal opening (12') and said drum exerting a conveying action on the loaded goods from the loading opening (12) to the removal opening (12'), characterised in, that a vacuum sluice (19, 19') is connected to both, the loading opening (12) and the removal opening (12'), and that there is provided on each side a vacuum seal (17), between both openings (12, 12') and the affiliated vacuum sluice (19, 19'), that is also effective when the drum (3) is rotating.

6. Vacuum tumbler according to claim **5**, characterised in, that at least the sluice (19) which is allocated to the loading opening (12) is a metering sluice that is preferably a bucket wheel and/or a slide sluice.

7. Vacuum tumbler according to claim **5** or **6**, characterised in, that the drum (3) comprises a helix (29) within it.

8. Vacuum tumbler according to claim **7**, characterised in, that there is provided no, or only a small distance of few millimetres between the helix (29) and the inner wall of the drum.

9. Vacuum tumbler according to claim **7**, characterised in, that the drum (3) undergoes one revolution during one operating cycle of either one of said vacuum sluices (19, 19').

10. Vacuum tumbler according to one of the claims **5** to **9**, characterised in, that each of the end walls (9,9') comprises a central wall section (10, 10') with a circular peripheral surrounding surface (13, 13') which does not rotate coaxial with the axis (11) of the drum and where the loading and unloading opening (12, 12') are located, and around which the drum shell (15) rotates.

11. Vacuum tumbler according to claim **10**, characterised in, that each of the end walls (9, 9') comprises an annular wall section (14, 14') that is closely connected to the drum shell (15) and rotates with it, the annular wall section (14, 14') surrounding the central wall section (10, 10'), and in that an annular vacuum seal (17, 17') is placed in between the wall sections (10, 14 respectively 10', 14').

12. Vacuum tumbler according to claim **10** or **11**, characterised in, that the central wall section (10, 10') is swingably supported by an axis which is orientated transversely to the longitudinal axis (11) of the drum and preferably in the span of the longitudinal axis of the drum, and with which it is displaceable in direction of the longitudinal axis (11) of the drum.

13. Vacuum tumbler according to one of the claims **10** to **12**, characterised in, that at least in one of the central wall sections (10, 10') there are connections (32-34 ) for a vacuum line and/or a line for the addition of a treatment ingredient (5) and/or a gas for the thermal influencing of the goods being treated.

14. Vacuum tumbler according to one of the claims **7** to **13**, characterised in, that the drum (3) and its shell (15) are rotably supported on rolls (2), and that the said system can be driven by a circumferential gear rim (4).

## Revendications

1. Procédé pour le traitement de portions de viande ou d'autres produits alimentaires portionnés, où les portions sont soumises à un agent de traitement (32, 33, 34) dans un tambour sous vide pendant une certaine période de temps, avec les pas:
- que les dites portions sont continuellement avancées à travers d'un premier sas (19) dans une zone de traitement (3) dans le tambour sous vide,
- que les portions sont continuellement avancées le long d'un chemin à travers la zone de traitement (3) où ils sont menées périodiquement le long d'une portion de transporteur hélicoïdal, tournées en même temps et soumises sous vide à un agent de traitement liquide (33, 34), et
- que les dites portions sont continuellement sortis de la zone de traitement (3) dans le tambour sous vide à travers d'un deuxième sas (19').

2. Procédé selon la revendication 1, caractérisé en ce qu'une multitude de portions est séparée dans des charges comprenant plusieurs portions et en ce que les charges sont amenées une après l'autre dans la zone de traitement (3).

3. Procédé selon la revendication 1 ou 2, caractérisé en ce qu'un agent de traitement (33, 34) est un agent refroidisseur comme un liquide s'évaporant vite ou un matériel sublimant vite.

4. Procédé selon une des revendication 1 à 3, caractérisé en ce qu'un agent de traitement (33, 34) est un liquide, qui est dissous, en suspension, émulsionné et/ou mélangé avec des épices, un sel, un agent conservateur et/ou une matière colorante.

5. Tambour pour mettre en exécution le procédé selon la revendication 1, en particulier pour le traitement de portions de viande ou d'autres produits alimentaires portionnés, avec un tambour (3) qui peut être tourné autour de son axe longitudinale (11) et qui peut être mis sous vide, qui comporte à un mur de face une ouverture de chargement (12) et qui comporte à l'autre mur de face une ouverture de déchargement (12'), et qui imprègne sur le matériel à traiter un mouvement partant de l'ouverture de chargement (12) vers l'ouverture de déchargement (12'), caractérisé en ce qu'il y a prévu aussi bien à l'ouverture de chargement (12) que à l'ouverture de déchargement (12') un sas (19, 19') et en ce qu'il y a entre les deux ouvertures (12, 12') et les sas correspondants (12, 19') respectivement un joint d'étanchéité (17) qui est aussi active lors du tambour tournant (3).

6. Tambour selon la revendication 5, caractérisé en ce que au moins le sas (19) prévu à l'ouverture de chargement (12) est un sas de dosage, de préférence un sas de roue à segments et/ou une écluse à vannes.

7. Tambour selon la revendication 5 ou 6, caractérisé en ce que le tambour (3) comprend une hélice (29) à l'intérieur.

8. Tambour selon la revendication 7, caractérisé en ce qu'il n'y a pas d'espace entre l'hélice (29) et le mur intérieur du tambour, ou au moins seulement un petit espace de l'ordre de quelques millimètres.

9. Tambour selon la revendication 7, caractérisé en ce que le tambour (3) fait un tour entier dans une période de travail d'un sas (19, 19').

10. Tambour selon une des revendications 5 à 9, caractérisé en ce que chaque mur de face (9, 9') comprend une zone (10, 10') centrale qui est coaxiale avec l'axe du tambour (11) et qui ne tourne pas avec celui-ci, et qui comprend une face de circonférence en forme de cercle (13, 13'), autour de laquelle tourne le manteau du tambour (15) et dans laquelle est prévu l'ouverture de chargement et de déchargement (12, 12').

11. Tambour selon la revendication 10, caractérisé en ce que chaque mur de face (9, 9') comprend une zone (14, 14') annulaire qui est reliée fixe avec le manteau du tambour (15) et qui tourne autour de la zone (10, 10') centrale, et en ce qu'il y a prévu entre les murs (10, 14, respectivement 10', 14') un joint d'étanchéité annulaire (17, 17').

12. Tambour selon la revendication 10 ou 11, caractérisé en ce que la zone centrale (10, 10') est prévu le long d'une axe longitudinale du tambour (11) qui est orientée transversalement et disposé préférablement dans une petite distance de l'axe longitudinale du tambour (11) et qui peut être poussée dans cette direction de l'axe longitudinale du tambour (11).

13. Tambour selon une des revendications 10 à 12, caractérisé en ce que au moins une des zones centrales (10, 10') possède des raccords (32 - 34) pour un conduit sous vide et/ou un conduit pour ajouter un agent de traitement (5) et/ou un gaz pour le traitement thermique du matériel à traiter.

14. Tambour selon une des revendications 7 à 13, caractérisé en ce que le tambour (3) peut être tourné avec son manteau (15) sur des rouleaux (2) avec l'aide d'un anneau denté (4) prévu à la circonférence.
